# EUROPÄISCHE PATENTSCHRIFT

(11) **EP 2 652 058 B1**
(45) Veröffentlichungstag und Bekanntmachung des Hinweises auf die Patenterteilung: **31.08.2016**
(21) Anmeldenummer: 11817304.6
(22) Anmeldetag: 12.12.2011
(51) Int. Cl.: C09J 5/02, C25D 11/26, C23C 22/73

(54) **HAFTVERMITTELN EINER FLÄCHE EINES TITANWERKSTOFFS**
PROMOTING THE ADHESION OF A SURFACE OF A TITANIUM MATERIAL
COLLAGE D'UNE SURFACE D'UN MATÉRIAU À BASE DE TITANE

(30) Priorität: 14.12.2010 DE 102010054473; 02.09.2011 DE 102011112117
(43) Veröffentlichungstag der Anmeldung: 23.10.2013
(73) Patentinhaber: Airbus Operations GmbH, 21129 Hamburg (DE)
(72) Erfinder: MERTENS, Tobias, 81671 München (DE); BENEKE, Martin, 28816 Stuhr (DE); GAMMEL, Franz J., 85521 Ottobrunn (DE)
(74) Vertreter: Schicker, Silvia
(86) Internationale Anmeldenummer: PCT/DE2011/002105
(87) Internationale Veröffentlichungsnummer: WO 2012/079563

(56) Entgegenhaltungen:
- EP-A1- 2 123 421
- EP-A1- 2 143 558
- WO-A2-2006/104644
- WO-A2-2008/066965
- CN-A- 101 519 783
- US-A1- 2006 147 634
- MERTENS T ET AL: "On the stability and composition of oxide layers on pre-treated titanium", INTERNATIONAL JOURNAL OF ADHESION AND ADHESIVES, ELSEVIER, AMSTERDAM, NL, Bd. 30, Nr. 6, 1. September 2010 (2010-09-01), Seiten 466-477, XP027118613, ISSN: 0143-7496 [gefunden am 2010-07-02]

## Beschreibung

Die Erfindung betrifft ein Verfahren zum Haftvermitteln einer Fläche eines Titanwerkstoffs sowie ein Fahrzeug, insbesondere Luftfahrzeug, mit einem eine Fläche aufweisenden Titanwerkstoff und einem der Fläche haftfest zugeordneten organischen Werkstoff.

Haftvermitteln einer Fläche eines Titanwerkstoffs ist bekannt. Eine Haftung von organischen Materialien wie beispielsweise Klebstoff, Lack, Dichtmittel und/oder ähnliches auf Titanwerkstoffen wird durch den Zustand einer Oberfläche der Fläche des Titanwerkstoffs bestimmt. Für Beschichtungen und/oder Verklebungen kann zuvor das Haftvermitteln der Oberfläche des Titanwerkstoffs erfolgen, das in einem einfachsten Fall aus einer Reinigung besteht. Außerdem ist es bekannt, gegebenenfalls nach der Reinigung eine physikalische und/oder chemische Behandlung der Oberfläche des Titanwerkstoffs durchzuführen, wobei eine Benetzbarkeit, eine chemische Verträglichkeit und/oder eine mechanische Verankerung des organischen Materials beeinflussbar ist. Bekannt ist ein mechanisches Aufrauen, beispielsweise mittels Strahlen, chemisches Ätzen sowie eine Ausbildung von Haftschichten mittels einer chemischen und/oder elektrochemischen Konversion, beispielsweise Phosphatieren und/oder Anodisieren und/oder Aufbringen von Beschichtungen. Die US 4 473 446 offenbart ein Verfahren zum Oberflächen behandeln von Titanteilen vor einem Verkleben mittels Anodisieren in einem Chromflusssäurebad bei einer Anodisierspannung zwischen einem Volt und 5 Volt. Die US 4 394 224 offenbart eine Methode zum Behandeln von Titanteilen oder Titanlegierungsteilen zum Erzeugen einer haftvermittelnden Oxidschicht. Es sind die Schritte Auftragen auf die Oberfläche und Behandeln der Oberfläche mit einer Mischung von wässrigen Lösungen aus Natriumhydroxid und Wasserstoffperoxid, Halten der aufgetragenen Mischung innerhalb eines Temperaturbereiches in dem das Wasserstoffperoxid relativ stabil ist und bewirken einer erhöhten Oxidationsrate auf dem Oberflächenbereich. Die DE 34 27 543 A1 bezieht sich auf ein alkalisches Bad zum Behandeln von Titan. Das Bad besteht aus einem Alkalihydroxid, einem Titankomplexbildner und einem Fremdionenkomplexbildner. Die US 3 907 609 offenbart einen chemischen Konversionsprozess und eine Zusammensetzung zum Produzieren einer haftenden Konversionsbeschichtung auf Titan und Titanlegierungen. Die EP 2 143 558 beschreibt einen Verbundwerkstoff umfassend einen Titanwerkstoff mit chemisch geätzter mikrostrukturierter Oberfläche und einen weiteren Werkstoff, wobei der zum Kleben verwendete Epoxidklebstoff auf der mikrostrukturierten Oberfläche des Titanwerkstoffs fest anbindet. Die US 5 814 137 sowie die US 6 037 060 betreffen eine Oberflächenbehandlung, vorzugsweise für Titan- und Aluminiumlegierungen, zum Ausbilden eines Sol-Gel-Films, der mittels kovalenten Bindungen an der Metalloberfläche haftet, zum Erzeugen einer starken, und langlebigen Klebeverbindung zwischen dem Metall und einem organischen Klebstoff ohne Verwendung von giftigen Chemikalien und unter signifikanten Reduzierung und/oder Eliminierung von Spülwassererfordernissen von herkömmlichen Anodisierungs- und/oder Ätzprozessen. Die DE 38 02 043 C1 betrifft ein Verfahren zur Vorbereitung einer Metalloberfläche. Dazu wird für die Verbindung mit Kunststoff auf eine Metalloberfläche durch Sandstrahlen mit einem Mittel aus 0,1 bis 30 Gewichtsprozent gegebenenfalls silanisiertem, amorphen siliziumhaltigen Material mit einer Korngröße kleiner 1 µm und zum Rest aus einem Sandstrahlmedium mit einer mittleren Korngröße größer 1 µm eine Schicht aufgebracht und diese gegebenenfalls anschließend silanisiert. Die DE 10 2006 045 951 A1 betrifft ein Verfahren zur chemischen Modifizierung und/oder Aktivierung von Festkörperoberflächen. Es wird bei dem Verfahren unter Verwendung von mindestens einem Trägermedium, das der Energiezufuhr in die Oberfläche hinein dient und der Oberfläche eine oder mehrere halogenhaltige Verbindungen zuführt, die Zuführung der halogenhaltigen Verbindungen erfolgt unter gleichzeitigem Zusatz von siliziumorganischen Verbindungen oder Silanen oder metallorganischen Verbindungen oder Siliziumhydriden oder Metallhydriden in das Trägermaterial. Die WO 2009/015329 A2 betrifft ein Verfahren zum Formen eines senkrecht orientierten Titannanoröhrenfelds unter Verwendung elektrochemischer Oxidation. Die WO 2006/104644 A2 betrifft ein oberflächenmodifiziertes Implantat, aufweisend zumindest eine metallhaltige Oberfläche, aufweisend eine Vielzahl von Nanotubes auf der Oberfläche, wobei die Nanotubes ein Oxid der metallhaltigen Oberfläche aufweisen. Die US 7 695 767 B2 betrifft ein Verfahren zum Bereitstellen einer superhydrophoben Oberfläche auf einer Struktur, beispielsweise Flugzeugflügeln, Propellern und/oder Rotoren. Das Verfahren beinhaltet Auftragen eines flusssäurehaltigen Mediums auf ein Titansubstrat. Die US 2010 0028387 A1 betrifft ein Titanoder Titanlegierungssubstrat, beschichtet mit einem molekularen Plasma abgelagerter Polypeptite, wobei das besagte Substrat eine nanotubularstrukturierte Oberfläche aufweist. Die WO 2009/017945 A2 betrifft nanotubular strukturierte Titansubstrate beschichtet mit nanopartikulärem-Hydroxylapatit (Nano-HA).

Aufgabe der Erfindung ist es, ein, insbesondere umweltfreundliches, Verfahren zur Vorbehandlung von Titanwerkstoffen, das eine langzeitbeständige, hochfeste Anbindung organischer Werkstoffe an die Titanwerkstoffe ermöglicht bereitzustellen.

Die Aufgabe ist bei einem Verfahren zum Haftvermitteln einer Fläche eines Titanwerkstoffs gemäß Anspruch 1 gelöst. Es umfasst das Erzeugen einer mit der Fläche des Titanwerkstoffs fest verbundenen und Titandioxid aufweisende Nanotubes mit einem Durchmesser von 10 bis 300 nm, insbesondere 20 bis 220 nm, insbesondere 30 bis 180 nm, insbesondere 40 bis 140 nm, insbesondere 50 bis 100 nm, aufweisenden Haftvermittlungsschicht auf der Fläche und ein haftfestes Aufbringen eines organischen Werkstoffs auf die die Nanotubes aufweisende Haftvermittlungsschicht vorgesehen. Es wurde herausgefunden, dass die Kombination der Nanotubes der angegebenen Dimensionierung mit dem organischen Werkstoff eine besonders langzeitstabile sowie hochfeste Anbindung des organischen Werkstoffs an den Titan Werkstoff ermöglicht. Unter der Fläche kann eine Oberfläche des Titanwerkstoffs, insbesondere vor dem Aufbringen der Haftvermittlungsschicht, verstanden werden.

Bei einer Ausführungsform des Verfahrens ist ein Beschichten der Fläche des Titanwerkstoffs mit dem organischen Werkstoff vorgesehen. Vorteilhaft kann eine Delamination des organischen Werkstoffs von dem Titanwerkstoff sicher vermieden werden. Die Beschichtung erfolgt mittels der Haftvermittlungsschicht, die sich dazu zwischen und/oder in einem Grenzbereich zwischen der Fläche und dem organischen Werkstoff befindet.

Bei einer weiteren Ausführungsform des Verfahrens ist ein stoffschlüssiges Fügen eines weiteren Werkstoffs mit der die Nanotubes aufweisenden Fläche mittels einer Klebeschicht des organischen Werkstoffs vorgesehen. Vorteilhaft ergibt sich eine langzeitbeständige und hochfeste Verklebung zwischen dem Titan Werkstoff und dem weiteren Werkstoff.

Bei einer weiteren Ausführungsform des Verfahrens ist ein strukturelles Verkleben eines den Titanwerkstoff aufweisenden Bauteils mit einem weiteren Bauteil mittels einer die Klebeschicht des organischen Werkstoffs aufweisenden Verklebung vorgesehen. Vorteilhaft können strukturelle Verklebungen, insbesondere zum Aufbauen einer tragenden Struktur, zwischen dem Titanwerkstoff bzw. dem Bauteil aus dem Titanwerkstoff und dem weiteren Bauteil realisiert werden. Unter einer Verklebung kann insbesondere eine Klebefläche, ein Klebepunkt und/oder eine Vielzahl von Klebepunkten verstanden werden.

Bei dem anspruchsgemäßen Verfahren ist ein anodisches Oxidieren der Fläche des Titan Werkstoffs zum Erzeugen der Nanotubes der Haftvermittlungsschicht vorgesehen. Vorteilhaft kann auf umweltfreundliche Art und Weise mittels des anodischen Oxidierens die Haftvermittlungsschicht hergestellt werden.

Bei einer weiteren Ausführungsform des Verfahrens ist vorgesehen, dass der Titanwerkstoff eine Legierung Ti6AI4V aufweist. Ein anodisches Oxidieren der Fläche ist in einem Elektrolyt mit einer Zusammensetzung von 50 bis 250 g/l, insbesondere 120 bis 140 g/l, vorzugsweise 130 g/l Ammoniumsulfat und 0,5 bis 10 g/l, insbesondere 4 bis 6 g/l, vorzugsweise 5 g/l Ammoniumfluorid, bei einer Temperatur von 10 bis 60°C, insbesondere 20 bis 30°C, vorzugsweise von 25°C und einer Spannung von vorzugsweise 2 bis 50 Volt, insbesondere 10 bis 20 Volt für 5 bis 480 Minuten, insbesondere 20 bis 40 Minuten, vorzugsweise 30 Minuten vorgesehen. Es wurde festgestellt, dass die angegebenen Elektrolyte vorteilhaft Rücklöseeigenschaften aufweisen, wobei vorteilhaft mit den angegebenen Parametern die Nanotubes in der gewünschten Dimension herstellbar sind. Es können eine

Schichtdicke von 100 bis 750 nm und ein Porendurchmesser von ca. 15 bis 80 nm erzeugt werden.

Die Aufgabe ist außerdem bei einem Fahrzeug, insbesondere Luftfahrzeug, mit einem eine Fläche aufweisenden Titanwerkstoff und einem der Fläche haftfest zugeordneten organischen Werkstoff gelöst. Es ist vorgesehen, dass zwischen der Fläche und dem organischen Werkstoff eine mit der Fläche des Titanwerkstoffs fest verbundene, haftfest dem organischen Werkstoff zugeordnete und Titandioxid aufweisende Nanotubes mit einem Durchmesser von 10 bis 300 nm, insbesondere 20 bis 220 nm, insbesondere 30 bis 180 nm, insbesondere 40 bis 140 nm, vorzugsweise 50 bis 100 nm aufweisende Haftvermittlungsschicht angeordnet ist. Vorteilhaft ergibt sich eine langzeitbestandige und hochfeste Anbindung des organischen Werkstoffs mittels der Haftvermittlungsschicht an dem Titanwerkstoff.

Anspruchsgemäß ist vorgesehen, dass das Fahrzeug ein den Titanwerkstoff und die Haftvermittlungsschicht aufweisendes Bauteil aufweist, das mittels einer Klebeschicht des organischen Werkstoffs strukturell mit einem weiteren Bauteil des Fahrzeugs verklebt ist. Vorteilhaft kann mittels der strukturellen Verklebung eine tragende Struktur des Fahrzeugs aufgebaut werden, die Anforderungen hinsichtlich einer Korrosionsbeständigkeit und/oder Stabilität genügt.

Bei einem weiteren Ausführungsbeispiel des Fahrzeugs ist vorgesehen, dass die Haftvermittlungsschicht eine Dicke von 100 nm bis 10 pm, insbesondere 200 nm bis 1 pm, insbesondere 250 bis 800 nm, insbesondere 280 bis 600 nm, insbesondere 300 bis 500 nm aufweist. Vorteilhaft lässt sich in den angegebenen Dicken eine langzeitstabile Haftvermittlungsschicht realisieren.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer oder mehrerer separaten Anmeldung/en sein. Gleiche, ähnliche und/oder funktionsgleiche Teile sind mit gleichen Bezugszeichen versehen.

Es zeigen:
- Fig. 1: ein teilweise dargestelltes Luftfahrzeug mit einer strukturellen Verklebung eines Bauteils mit einem Titanwerkstoff und einem weiteren Bauteil;
- Fig. 2: eine elektronenmikroskopische Aufnahme einer Anodisierungsschicht in einer Seitenansicht;
- Figur 3: eine Draufsicht der in Figur 2 gezeigten Anodisierungsschicht;
- Figur 4: eine Draufsicht auf eine Fügestelle zwischen einem einen Titanwerkstoff aufweisenden Bauteil und einem weiteren Bauteil nach einem Stirnabzugstest; und
- Figur 5: ein Schaubild eines Alterungstests mittels einer Keilprüfung mit drei unterschiedlichen Haftvermittlungsverfahren im Vergleich.

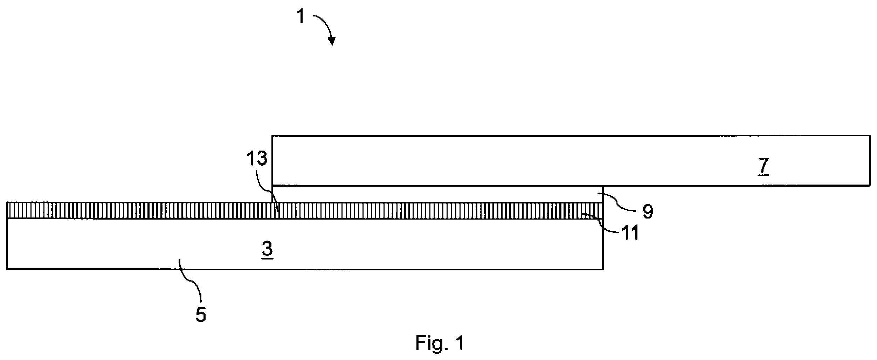

Figur 1 zeigt ein teilweise dargestelltes Luftfahrzeug 1 mit einem Bauteil 3, das einen Titanwerkstoff 5 aufweist und/oder aus diesem besteht. Unter einem Titanwerkstoff kann Titan und/oder eine Titanlegierung verstanden werden. Das Bauteil 3 ist mit einem weiteren Bauteil 7 mittels einer Klebeschicht 9, insbesondere Klebstoffschicht eines Klebstoffs, strukturell verklebt. Das weitere Bauteil 7 kann einen beliebigen Werkstoff aufweisen, insbesondere einen Aluminiumwerkstoff, einen faserverstärkten Kunststoff oder ebenfalls einen Titanwerkstoff. Die Klebeschicht 9 ist mittels einer Haftvermittlungsschicht 11 fest mit dem Bauteil 3 verbunden. Die Haftvermittlungsschicht 11 weist Nanotubes 13 auf, die ein Titandioxid aufweisen und auch als Nanoröhren bezeichnet werden.

Im Folgenden wird anhand eines konkreten Beispiels das Erzeugen der Nanotubes 13 der Haftvermittlungsschicht 11 auf dem Titanwerkstoff 5 näher erläutert.

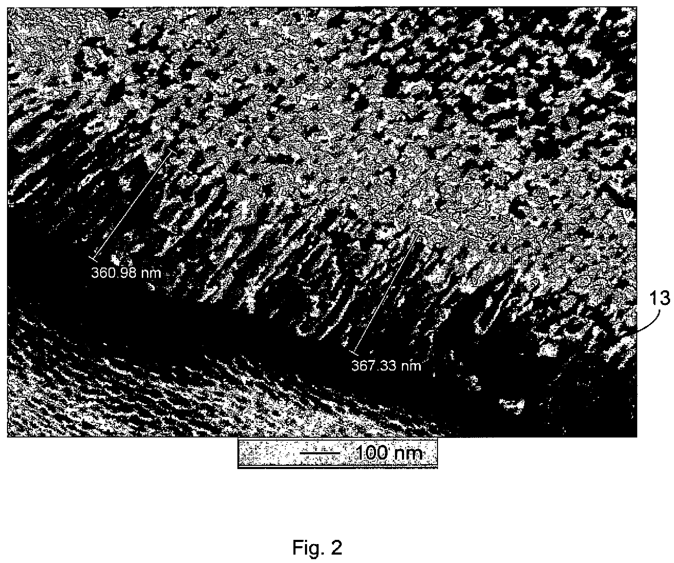

Bei dem Bauteil 3 kann es sich beispielsweise um ein Blech der Legierung Ti6Al4V handeln. Dieses wird in einen Elektrolyten der Zusammensetzung Ammoniumsulfat 130 g/l und Ammoniumflourid 5 g/l getaucht. Der Elektrolyt ist vorteilhaft flusssäurefrei. Unter Verwendung von Ti6Al4V als Gegenelektrode wird bei einer Temperatur von 25°C mit einer Spannung von 10 bis 20 Volt für 30 Minuten anodisiert. Vorteilhaft entsteht dabei eine regelmäßig ausgeprägte poröse Oxidschicht in einer Dicke von ca. 400 bis 500 nm. Die oberen offenen Poren, die vorteilhaft die Nanotubes 13 bilden, haben einen Porendurchmesser von ca. 40 bis 80 nm. Ein entsprechendes Ergebnis zeigt Figur 2.

Figur 2 zeigt die Haftvermittlungsschicht 11 als Elektronenmikroskopaufnahme in einem so genannten Kryobruch, wobei die Haftvermittlungsschicht 11 die Nanotubes 13, so genannte TiO₂-Nanotubes, also die Anodisierschicht aufweist und/oder aus dieser besteht.

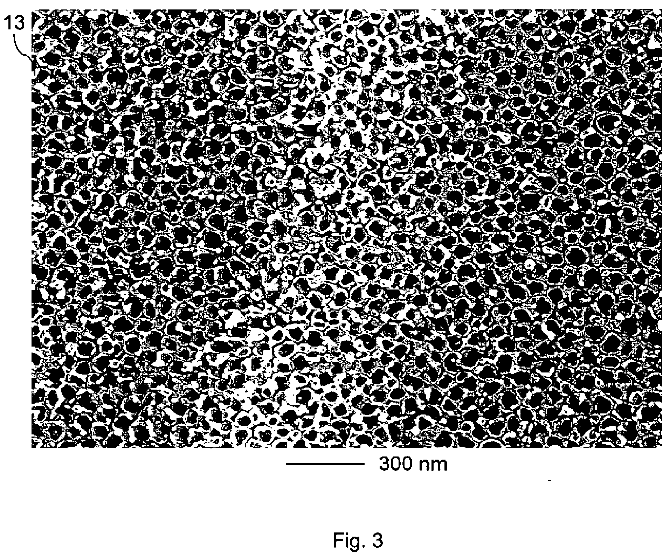

Figur 3 zeigt eine Draufsicht auf die in Figur 2 gezeigte Haftvermittlungsschicht 11 der Anodisierschicht auf dem Titanwerkstoff 5 Ti6Al4V.

Zur Überprüfung der Haftfestigkeit der Klebeschicht 9 und einer Bewertung des beschriebenen Verfahrens, wurden zwei Klebetests durchgeführt.

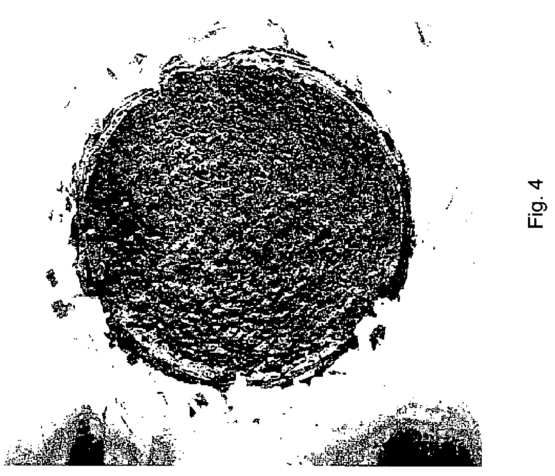

Eine Klebehaftung wurde mittels eines Stirnabzugstests nach ISO 4624 überprüft. Dazu wurde ein Ti6Al4V-Blech, also beispielsweise das Bauteil 3, mittels des vorab beschriebenen Verfahrens vorbehandelt und mit einem chromsäureanodisierten Aluminiumstempel, beispielsweise dem weiteren Bauteil 7, verklebt. Als Klebstoff der Klebeschicht 9 wurde ein Epoxidharzklebstoff, ein Zweikomponentenkonstruktionsklebstoff, bekannt unter dem Markennamen Scotch-Weld ® DP 490 erhältlich über die Fa. 3M verwendet. Dieser Klebstoff weist eine Zugscherfestigkeit von 26 MPa (bei 23°C und gebeiztem Aluminium) auf. Vorteilhaft konnte bei den getesteten Proben ein rein kohäsives Versagen im Klebstoff, also in der Klebeschicht 9, festgestellt werden, was in Figur 4 näher dargestellt ist.

Um eine Alterungsbeständigkeit der mittels des vorab beschriebenen Verfahrens durchgeführten Vorbehandlung zu bewerten, wurde eine Keilprüfung nach DIN 65448 durchgeführt. Bei einem Klima von 50°C und 95 % relativer Luftfeuchtigkeit konnte mit dem vorab beschriebenen Anodisierverfahren ein Rissfortschritt erzielt werden, der vergleichbar mit dem so genannten NaTESi-Verfahren ist. Das NaTESi-Verfahren ist beispielsweise in der DE 34 27 543 A1 offenbart. Das NaTESi-Verfahren ist für hochfeste strukturelle Verklebungen entwickelt worden und kann bezüglich Festigkeit als Referenzverfahren herangezogen werden.

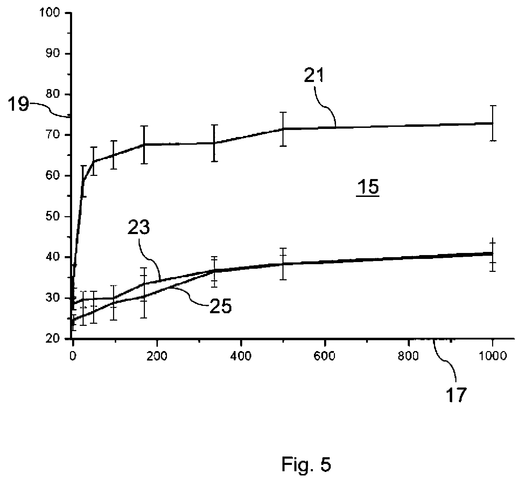

Im Vergleich zu einer kommerziellen Titanvorbehandlung, beispielsweise in Form von alkalischem Beizen, insbesondere für Verklebungen, führt das vorab beschriebene Verfahren zu einem deutlich geringeren Rissfortschritt, was in Figur 5 zu erkennen ist.

Figur 5 zeigt ein Schaubild 15, wobei auf einer x-Achse 17 eine Zeit zwischen 0 und 1000 h und auf einer y-Achse 19 eine Risslänge zwischen 20 mm und 100 mm aufgetragen sind. Auf dem Schaubild 15 sind insgesamt drei Rissverläufe, nämlich ein erster Rissverlauf 21 für das alkalische Beizen, ein zweiter Rissverlauf 23 für das vorab beschriebene erfindungsgemäße Verfahren und ein dritter Rissverlauf 25 für das NaTESi-Verfahren aufgetragen. Es ist zu erkennen, dass das vorab beschriebene erfindungsgemäße Verfahren die Werte des NaTESi-Verfahrens erreicht, daher diesem gleichwertig ist.

Vorteilhaft können mittels des vorab beschriebenen Verfahrens auf besonders umweltfreundliche Art und Weise langzeitstabile nanostrukturierte Titanoberflächen geschaffen werden, welche für langzeitstabile und/oder hochfeste organische Beschichtungen einen geeigneten Untergrund darstellen. Es ist denkbar, anstelle der Klebeschicht 9 lediglich eine Beschichtung auf der Haftvermittlungsschicht 11 aufzubringen.

Vorteilhaft führt das erfindungsgemäße Verfahren zu langzeitstabilen nanostrukturierten Titanoberflächen. Diese Strukturierung, also die Vielzahl der Nanotubes 13 ermöglicht Langzeit beständige strukturelle Verklebungen, insbesondere im Flugzeugbau, was vorteilhaft neue Designkonzepte ermöglicht (siehe Figur 1). Ebenso kann vorteilhaft mittels der Vorbehandlung eine Delamination von Lacken, insbesondere auf Titannieten, sicher vermieden werden, wobei vorteilhaft Kosten für Nachlackierungen vermieden werden können und gegebenenfalls Wartungsintervalle eingespart werden können.

Vorteilhaft kann mittels des erfindungsgemäßen Verfahrens auf dem den Titanwerkstoff 5 aufweisenden Bauteil 3 die Haftvermittlungsschicht 11 erzeugt werden, die vorteilhaft mit haftfesten Beschichtungen mit organischen Materialien wie Klebstoff, Lack, Dichtstoff usw. versehen werden kann, wobei sich eine hohe Haftfestigkeit sowie Langzeitbeständigkeit entsprechender Beschichtungen und/oder Verklebungen ergibt.

Basis des Verfahrens ist eine Erzeugung einer stabilen Oxidschicht auf der Titanoberfläche des Titanwerkstoffs 5 durch eine anodische Oxidation in einem Elektrolyten, wobei dieser vorteilhaft nicht umweltgefährdende Bestandteile aufweist.

Erfindungsgemäß werden zur Titanvorbehandlung Elektrolyte verwendet, mittels denen gezielt poröse Oberflächenmorphologien auf Titan herstellbar sind. Geeignet sind alle Elektrolyte, die eine Rücklöseeigenschaft aufweisen und daher zum Erzeugen von Porenstrukturen geeignet sind, wobei deren Durchmesser sich im Bereich von 10 bis 300 nm, 20 bis 220 nm, insbesondere 30 bis 180 nm, insbesondere 40 bis 140 nm, bevorzugt 50 bis 100 nm bewegen. Geeignet sind Dicken der Oxidschichten, also der Haftvermittlungsschicht 11 zwischen100 nm bis 10 µm, insbesondere 200 nm bis 1 µm, insbesondere 250 bis 800 nm, insbesondere 280 bis 600 nm, bevorzugt 300 bis 500 nm.

Vorteilhaft weist das erfindungsgemäße Verfahren keine Flusssäure auf bzw. verwendet keine Flusssäure, ist also Flusssäurefrei, wobei vorteilhaft ein geringeres Gefährdungspotential gegeben ist.

### Bezugszeichenliste

- 1: Luftfahrzeug
- 3: Bauteil
- 5: Titanwerkstoff
- 7: Bauteil
- 9: Klebeschicht
- 11: Haftvermittlungsschicht
- 13: Nanotubes
- 15: Schaubild
- 17: x-Achse
- 19: y-Achse
- 21: erster Rissverlauf
- 23: zweiter Rissverlauf
- 25: dritter Rissverlauf

## Patentansprüche

1. Verfahren zum Haftvermitteln einer Fläche eines Titanwerkstoffs (5) umfassend:
- Erzeugen einer mit der Fläche des Titanwerkstoffs (5) fest verbundenen Haftvermittlungsschicht (11) mit Titandioxid (TiO₂) aufweisenden Nanotubes (13) eines Durchmessers in einem Bereich von 10 bis 300 nm; umfassend ein anodisches Oxidieren der Fläche des Titanwerkstoffs (5) zum Erzeugen der Nanotubes (13) der Haftvermittlungsschicht (11), wobei das anodische Oxidieren der Fläche in einem Elektrolyten mit einer Zusammensetzung von 50 bis 250 g/l, insbesondere 120 bis 140 g/l Ammoniumsulfat und 0,5 bis 10 g/l, insbesondere 4 bis 6 g/l Ammoniumfluorid bei einer Temperatur in einem Bereich von 10 bis 60°C, insbesondere 20 bis 30°C und einer Spannung in einem Bereich von 2 bis 50 Volt, insbesondere 10 bis 20 Volt, für 5 bis 480 Minuten, insbesondere 20 bis 40 Minuten, erfolgt
- Haftfestes Aufbringen eines organischen Werkstoffs auf die Haftvermittlungsschicht (11).

2. Verfahren nach dem vorhergehenden Anspruch, mit:
- Beschichten der Fläche des Titanwerkstoffs (5) mit dem organischen Werkstoff.

3. Verfahren nach einem der vorhergehenden Ansprüche mit:
- stoffschlüssiges Fügen eines weiteren Werkstoffs mit der die Nanotubes (13) aufweisenden Fläche mittels einer Klebeschicht des organischen Werkstoffs.

4. Verfahren nach einem der vorhergehenden Ansprüche, mit:
- strukturelles Verkleben eines den Titanwerkstoff (5) aufweisenden Bauteils (3) mit einem weiteren Bauteil (7) mittels einer die Klebeschicht (9) des organischen Werkstoffs aufweisenden Verklebung.

5. Verfahren nach Anspruch 4, wobei der Titanwerkstoff (5) aus Ti6Al4V besteht.

6. Fahrzeug, insbesondere Luftfahrzeug (1), mit einem eine Fläche aufweisenden Titanwerkstoff (5) und einer der Fläche haftfest zugeordneten Klebeschicht (9) eines organischen Werkstoffs, wobei zwischen der Fläche und der Klebeschicht (9) des organischen Werkstoffs eine mit der Fläche des Titanwerkstoffs (5) fest verbundene, haftfest der Klebeschicht (9) des organischen Werkstoffs zugeordnete und Titandioxid (TiO₂) aufweisende Nanotubes (13) mit einem Durchmesser von 20 bis 220 nm, insbesondere 30 bis 180 nm, insbesondere 40 bis 140 nm, insbesondere 50 bis 100 nm, aufweisende Haftvermittlungsschicht (11) angeordnet ist.

7. Fahrzeug nach dem vorhergehenden Anspruch, wobei das Fahrzeug ein den Titanwerkstoff (5) und die Haftvermittlungsschicht (11) aufweisendes Bauteil aufweist, das mittels der Klebeschicht (9) des organischen Werkstoffs strukturell mit einem weiteren Bauteil (7) des Fahrzeugs verklebt ist.

8. Fahrzeug nach einem der vorhergehenden zwei Ansprüche, wobei die Haftvermittlungsschicht (11) eine Dicke von
100 nm bis 10 µm, insbesondere
200 nm bis 1 µm, insbesondere
250 bis 800 nm, insbesondere
280 bis 600 nm, vorzugsweise
300 bis 500 nm aufweist.

## Claims

1. A method of promoting the adhesion of a surface of a titanium material (5), the method comprising:
- creating an adhesion promoting layer (11) that is fixedly attached to the surface of the titanium material (5) and comprises nanotubes (13) including titanium dioxide (TiO₂) and having a diameter in a range of 10 to 300 nm; comprising anodically oxidizing the surface of the titanium material (5) so as to create the nanotubes (13) of the adhesion promoting layer (11), wherein the anodically oxidizing of the surface is performed in an electrolyte having a composition of 50 to 250 g/l, in particular 120 to 140 g/l, ammonium sulfate and 0.5 to 10 g/l, in particular 4 to 6 g/l ammonium fluoride, at a temperature in a range of 10 to 60°C, in particular 20 to 30°C and at a voltage in a range of 2 volts to 50 volts, in particular 10 to 20 volts, for 5 minutes to 480 minutes, in particular 20 to 40 minutes; and
- fixedly applying an organic material to the adhesion promoting layer (11).

2. The method according to claim 1 comprising:
- coating the surface of the titanium material (5) with the organic material.

3. The method according to claim 1 comprising:
- bonding a further material to the surface comprising the nanotubes (13) by way of an adhesive layer of the organic material.

4. The method according to claim 1 comprising:
- structurally bonding a component (3) comprising the titanium material (5) to a further component (7) by way of a bond that comprises the adhesive layer (9) of the organic material.

5. The method according to claim 4, wherein the titanium material (5) is made of Ti6Al4V.

6. Vehicle, in particular aircraft (1), comprising a titanium material (5) having a surface and an adhesive layer (9) of an organic material that is associated with the surface, wherein an adhesion promoting layer (11) that is fixedly attached to the surface of the titanium material (5), that is adhesively associated with the adhesive layer (9) of the organic material and that comprises nanotubes (13) including titanium dioxide (TiO₂) and having a diameter in a range of 20 to 220 nm, in particular 30 to 180 nm, in particular 40 to 140 nm, in particular 50 to 100 nm, is arranged between the surface and the adhesive layer (9) of the organic material.

7. Vehicle according to the preceding claim, wherein the vehicle comprises a component comprising the titanium material (5) and the adhesion promoting layer (11), that is structurally bonded to a further component (7) of the vehicle by way of the adhesive layer (9) of the organic material.

8. Vehicle according to any one of the two preceding claims, wherein the adhesion promoting layer (11) has a thickness of
100 nm to 10 µm, in particular
200 nm to 1 µm, in particular
250 to 800 nm, in particular
280 to 600 nm, in particular
300 to 500 nm.

## Revendications

1. Procédé pour assurer l'adhérence d'une surface d'un matériau en titane (5), comprenant les étapes suivantes :
- la formation d'une couche promotrice d'adhérence (11) reliée de façon fixe à la surface du matériau en titane (5) et constituée de nanotubes (13) contenant du dioxyde de titane (TiO₂) d'un diamètre compris entre 10 et 300 nm ; incluant une oxydation anodique de la surface du matériau en titane (5) pour la formation des nanotubes (13) de la couche promotrice d'adhérence, l'oxydation anodique de la surface s'effectuant dans un électrolyte dont la composition comprend de 50 à 250 g/l, plus particulièrement de 120 à 140 g/l de sulfate d'ammonium, et de 0,5 à 10 g/l, plus particulièrement de 4 à 6 g/l de fluorure d'ammonium, à une température comprise dans une plage allant de 10 à 60°C, plus particulièrement de 20 à 30°C, et sous une tension comprise dans une plage allant de 2 à 50 Volt, plus particulièrement de 10 à 20 Volt, pendant une durée allant de 5 à 480 minutes, plus particulièrement de 20 à 40 minutes,
- l'application par adhérence d'un matériau organique sur la couche d'adhérence (11).

2. Procédé selon la revendication précédente, comprenant :
- le revêtement de la surface du matériau en titane (5) avec le matériau organique.

3. Procédé selon l'une des revendications précédentes, comprenant :
- l'assemblage par pénétration de matière d'un matériau supplémentaire et de la surface présentant les nanotubes, au moyen d'une couche adhésive du matériau organique.

4. Procédé selon l'une des revendications précédentes, comprenant :
- le collage structural d'une pièce (3) présentant le matériau en titane (5) à une autre pièce (7) par jonction adhésive au moyen de la couche adhésive (9) du matériau organique.

5. Procédé selon la revendication 4, le matériau en titane (5) étant constitué de Ti6Al4V.

6. Véhicule, plus particulièrement un aéronef (1), comportant un matériau en titane (5) présentant une surface et une couche adhésive (9) de matériau organique associée de manière adhérente à cette surface, une couche promotrice d'adhérence (11), qui est reliée de façon fixe à la surface du matériau en titane (5) et est associée de manière adhérente à la couche adhésive (9) du matériau organique, et qui présente des nanotubes (13) contenant du dioxyde de titane (TiO₂) d'un diamètre compris entre 20 et 220 nm, plus particulièrement entre 30 et 180 nm, plus particulièrement entre 40 et 140 nm, plus particulièrement entre 50 et 100 nm, étant disposée entre ladite surface et la couche adhésive (9) du matériau organique.

7. Véhicule selon la revendication précédente, ce véhicule présentant une pièce comportant le matériau en titane (5) et la couche promotrice d'adhérence (11), laquelle pièce est collée par collage structural à une autre pièce (7) au moyen de la couche adhésive (9) du matériau organique.

8. Véhicule selon l'une des deux revendications précédentes, la couche promotrice d'adhérence (11) présentant une épaisseur allant
de 100 nm à 10 µm, plus particulièrement
de 200 nm à 1 µm, plus particulièrement
de 250 à 800 nm, plus particulièrement
de 280 à 600 nm, préférentiellement
de 300 à 500 nm.
